# EUROPEAN PATENT APPLICATION

(11) **EP 2 937 755 A1**
(43) Date of publication of application: **28.10.2015**
(21) Application number: 15159673.1
(22) Date of filing: 18.03.2015
(51) Int. Cl.: G05B 23/02, F02C 9/00

(54) **A method and system for managing the health of a machine**

(30) Priority: 11.04.2014 GB 201406551
(71) Applicant: Rolls-Royce plc, London SW1E 6AT (GB)
(72) Inventor: Wall, Derek, Derby, Derbyshire DE24 8BJ (GB); Jones, Matthew, Derby, Derbyshire DE24 8BJ (GB); Mills, Andrew, Derby, Derbyshire DE24 8BJ (GB)
(74) Representative: Rolls-Royce plc

(57) **Abstract**

A method of optimising the performance of a machine that comprises an element, comprises the steps of:
(a) receiving operational data, the operational data being representative of an operational state of the machine;
(b) transmitting an adjustment signal to the element to change the operational state of the element from a first state to a second state, the predetermined second state being dependent on the operational state of the machine;
(c) generating an optimising action by processing the operational data, a history of previous operational states of the machine, a history of previous adjustment signals, and a sequence of previously applied optimising actions ; and
(d) applying the optimising action to the machine to optimise the performance of the machine.

## Description

### Field of the Invention

The present invention relates to a method and a system for managing the health of a machine, and particularly, but not exclusively, to a method and a system for the reconfiguration of the machine in response to the autonomous diagnosis of fault conditions.

### Background to the Invention

Complex systems often employ feedback and redundancy to make them passively robust to changes in the system. Examples of such changes are faults and degradation, which may be ameliorated in two ways. Firstly, passively robust control schemes may be used in which local changes are made to the system, for example by increasing the control effort applied by a feedback control. Secondly, control changes with a system-wide performance impact, such as altering a set point, must be orchestrated actively. Such control changes are often initiated by the diagnosis of a particular fault condition.

Autonomous diagnosis of a machine's condition is a well-known activity for which a multitude of approaches have been proposed. Common to all such approaches is the output of a set of machine condition states, detailed to sub-part or component level, each of which may incorporate an uncertainty measure. This set of machine condition possibilities is referred to as the diagnosis, and is often used to direct maintenance action.

Using a diagnosis to produce a corrective action is often termed contingency management or fault reconfiguration. It is known to apply the concept of contingency management to autonomous systems. Examples of such approaches include the use of on-line optimisation procedures to reconfigure controllers and set points, and the use of an intelligent agent reasoning scheme to make planning and reconfiguration changes to a system.

The methodology used to select the appropriate action may be referred to as autonomous reasoning and such techniques may be used to optimise the cost of performing a reconfiguration against its benefit.

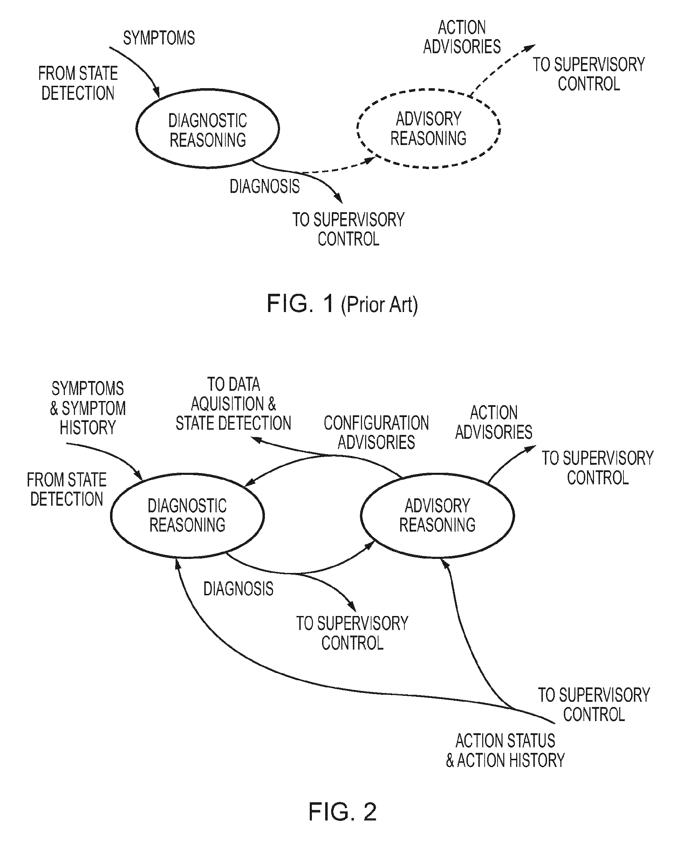

An example of such a prior art scheme is shown in Figure 1. In the scheme of Figure 1, symptoms, detected by well-known means, are interpreted by a diagnostic reasoning approach to generate an action directly. Alternatively, a secondary Advisory Reasoning step may be incorporated prior to the generation of the action. Examples of such generated actions include control reconfiguration and the performance of diagnostic tests.

There are a number of problems with the prior art scheme. Firstly, the action history (for example, any previously applied changes to control signals) is not used when determining forthcoming actions. Secondly, there is no capability within the scheme for proposing diagnostic tests which could be applied to the scheme.

In other words, the prior art schemes perform a 'single shot' response to any currently observed data.

When implemented in an aerospace application, a guaranteed deterministic and transparent reasoning for contingency management is paramount. A further problem with the prior art schemes, when implemented in such applications is that the necessarily complex techniques employed by such schemes are difficult to certify in practice; an essential feature of any aerospace application. For example, the optimisation approaches of the prior art cannot with anything but the simplest of models be guaranteed to deliver a deterministic answer.

### Statements of Invention

According to a first aspect of the present invention there is provided a method of optimising the performance of a machine, the machine comprising an element, the method comprising the steps of:
(a) receiving operational data, the operational data being representative of an operational state of the machine;
(b) transmitting an adjustment signal to the element to change the operational state of the element from a first state to a second state, the predetermined second state being dependent on the operational state of the machine;
(c) generating an optimising action by processing the operational data, a history of previous operational states of the machine, a history of previous adjustment signals, and a sequence of previously applied optimising actions ; and
(d) applying the optimising action to the machine to optimise the performance of the machine.

The term 'performance' when used in the context of a machine, refers to the operation of the machine as intended by its designer. In other words, optimising the performance of the machine is to be understood to mean ensuring that the machine responds to its operating environment in as exactly as possible the manner intended by its designer.

An advantage of the method of the invention is that by incorporating the action history (for example, the sequence of previously applied actions) together with the system's response to these actions, an interactive diagnosis of the system may be performed.

Using the histories of previous operational states and previous adjustment signals together with the sequence of previously applied optimising actions, enables a new optimising action to be generated in an iterative manner. This iterative technique will optimise the performance of the machine more quickly than the prior art 'single shot' technique.

Optionally, step (c) comprises applying rules to the operational data, the history of previous operational states of the machine, any adjustment signals, and the sequence of previously applied optimising actions.

The operational data may be processed by a rule-based processor in which a variety of analysis and diagnosis methodologies can be implemented.

Optionally, the optimising action is a diagnostic test, and step (d) comprises the steps of:
- applying the diagnostic test to the element to obtain a corresponding diagnostic test result;
- if the diagnostic test result indicates that a performance of the element is deficient relative to a predetermined capability of the element, generating a corrective action based on the operational data and the diagnostic test result; and
- applying the corrective action to the element to thereby restore the performance of the element, and so to optimise the performance of the machine.

A further advantage of the method of the invention is that by initiating appropriate diagnostic tests, an interactive diagnosis may be performed.

An advantage of the optimising action being a diagnostic test is that it enables the method to autonomously diagnose a performance deficit and then, in response to the deficit, to propose and implement a corrective action, without the intervention of an operator. This makes the method both time and cost efficient for a user.

Optionally, the corrective action is generated by the steps of:
- processing the operational data and the diagnostic test result to generate a plurality of remedial actions;
- ranking the remedial actions according to a prediction of each remedial action's ability to restore the performance of the element to the level defined by its capability; and
- setting the corrective action to be the highest ranked of the remedial actions.

This enables the method to select the corrective action which is likely to produce the most effective remedial or corrective action. This in turn makes the method more efficient and useful to a user than the above-described prior art methods.

Optionally, the step of generating a plurality of remedial actions comprises applying rules to the operational data and the diagnostic test result.

The use of a rule-based processor enables the method of the invention to implement a variety of diagnostic routines dependent upon the quantity of and values for the operational data that is received.

Optionally, the machine further comprises a sensing element configured to sense an operational parameter of the machine, the sensing element being coupled to the element, and the optimising action comprises the reconfiguration of the sensing element, and step (d) comprises the steps of:
- comparing a performance of the element with a predetermined capability of the element; and
- if the performance differs from the capability by an amount greater than a predetermined reconfiguration margin then perform a reconfiguration of the sensing element associated with the element, to optimise the performance of the machine.

This ensures that the reconfiguration of any sensing element is undertaken based on both the magnitude of the sensed parameter and the predetermined capability of the sensed element. The magnitude of the sensed parameter is important because it is used to determine the magnitude of the corrective action.

Furthermore taking account of the predetermined capability of the element ensures that any generated corrective action is within the capability of the element. In other words, the corrective action can be practically applied to the element.

Optionally, the optimising action comprises an interaction between the machine and an external control station, and step (d) comprises the steps of:
- transmitting operational data from the element to an external control station;
- analysing the operational data to determine a current performance of the element;
- generating, within the external control station, a transformation signal based on the current performance of the element and a predetermined capability of the element;
- transmitting the transformation signal from the external control station to the machine; and
- applying the transformation signal to the element to restore the performance of the element to a level defined by its capability, and so optimise the performance of the machine.

According to a second aspect of the present invention there is provided a system for optimising the performance of a machine, the machine comprising an element, the system comprising:
a data capture module, adapted to capture operational data, the operational data being representative of an operational state of the machine;
a processor adapted to receive operational data from the data capture module, and to generate corresponding control signals and adjustment signals;
a control signal transmission module adapted to transmit the control signals to the element;
an adjustment signal transmission module adapted to transmit the adjustment signals to the element;
the processor being further adapted to generate an optimising action by processing the operational data, a history of previous operational states of the machine, a history of previous adjustment signals, and a sequence of previously applied optimising actions;
the processor being still further adapted to alter the state of the element dependent on the optimising action, and so to optimise the performance of the machine.

The system of the invention can be implemented as a relatively compact physical unit. This makes the system attractive to a user because it provides for optimised performance of a machine without the need for human intervention. The compact physical size of the system allows a user to save weight and cost when implementing optimisation of the performance of a machine.

Optionally, the element comprises an actuatable element.

In one arrangement, the machine is an aircraft with the plurality of actuatable elements including *inter alia* the aircraft control surfaces, the engine fuel pumps and other engine control actuators, such as variable inlet guide vanes.

In other arrangements, the machine may be another vehicle, such as an automobile, or some item of industrial plant equipment. In each such arrangement, the plurality of actuatable elements relate to sub-system components forming part of the machine.

Optionally, the system further comprises a sensing element configured to sense an operational parameter of the machine, the sensing element being coupled to the element.

By associating each element with a sensing element it becomes possible to collect data representative of the operation and state of the element whilst the machine is in operation. This makes the operational data directly representative of the operational state of the machine and so enabling the method of the invention to optimise the performance of the machine.

The element may incorporate a sensing portion which can provide operational data according to the operational state, or condition, of the element itself.

For example, the actuatable element may be a control surface for an aircraft in which a displacement sensor provides an indication of the degree of rotation of the control surface, and a pressure transducer provides an indication of the level of force applied to the control surface. This rotation and force information can be transmitted to the performance optimisation system as an input to the method.

Optionally, the optimising action is a diagnostic test to be applied to the element.

The use of a diagnostic test which is applied to an element of the machine enables the system of the invention to obtain more detailed data regarding the performance and capability of the element itself.

For example, if the operational data received from an element is such as to imply that the element is deficient in some way, an optimising action comprising a diagnostic test can be applied to the element. This will allow the system to obtain more detailed information about the state and capability of the element. This information may then confirm whether the element is faulty thus allowing corrective action to be taken to ensure optimum performance of the machine.

Optionally, the system further comprises an operational data transmission module and an external control station, the operational data transmission module being adapted to transmit operational data to the external control station, the external control station being adapted to process the operational data and transmit an adjustment signal to the system, and the system being adapted to alter the state of the element dependent upon the adjustment signal, to optimise the performance of the machine.

There may be a situation where the use of an on-board diagnostic test cannot provide sufficient information to enable the system to decide on the nature of a particular fault or set of faults.

In such situation, the optimising action takes the form of an interaction between the system and a remote ground station with operational data transmitted to the ground station for further analysis by a human operator.

Optionally, the machine is a hybrid powerplant comprising a plurality of prime movers, each prime mover being selected from the group comprising gas turbine engines, steam turbine engines, reciprocating piston engines and electric motors.

Any complex powerplant will require a high level of supervision and control in order to ensure that it is operating in the most efficient manner. One known technique for controlling such a system is to use a human operator who is capable of dealing with a multitude of operational scenarios, although this is expensive and inconvenient.

The method of the invention allows for autonomous control of a complex hybrid powerplant by virtue of the ability of the method to accommodate a variety of operational conditions and problems.

An advantage of providing for an interaction between the machine and an external control station is that a diagnosed performance deficit can be reviewed by a human operator and appropriate corrective action taken in a single step whereas the method of the invention might require several iterative steps. This makes the method of the invention more efficient and convenient for a user.

In one embodiment of the invention, the external control station may be a ground based control station. In this embodiment, the interaction with the external control station may be with an automated 'expert system' located in the external control station, or the interaction may be with a human operator working in the ground based control station.

Alternatively the external control station may be a human operator working coterminously with the machine, for example if the machine is an aircraft powerplant, the external control station may be a crew member of the aircraft.

Optionally, the machine is a gas turbine engine.

The method of the invention provides advantages over a human operator even where the machine is a gas turbine engine by enabling the performance of the machine to be optimised without requiring extensive human intervention in its operation.

According to a third aspect of the present invention there is provided a computer program having instructions adapted to carry out the method of the invention.

According to a fourth aspect of the present invention there is provided a computer readable medium, having a computer program recorded thereon, wherein the computer program is adapted to make the computer execute the method of the invention.

According to a fifth aspect of the present invention there is provided a computer program comprising the computer readable medium of the invention.

Other aspects of the invention provide devices, methods and systems which include and/or implement some or all of the actions described herein. The illustrative aspects of the invention are designed to solve one or more of the problems herein described and/or one or more other problems not discussed.

### Brief Description of the Drawings

There now follows a description of an embodiment of the invention, by way of nonlimiting example, with reference being made to the accompanying drawings in which:
Figure 1 shows a flow chart of a monitoring scheme according to the prior art;
Figure 2 shows a flow chart of a health management system according to the invention;
Figure 3 shows a flow chart of an iterative process forming part of the system of Figure 2;
Figure 4 shows an example embodiment of the system of Figures 2 and 3; and
Figure 5 shows a schematic arrangement of the reasoning architecture of the example embodiment of Figure 4.

It is noted that the drawings may not be to scale. The drawings are intended to depict only typical aspects of the invention, and therefore should not be considered as limiting the scope of the invention. In the drawings, like numbering represents like elements between the drawings.

### Detailed Description

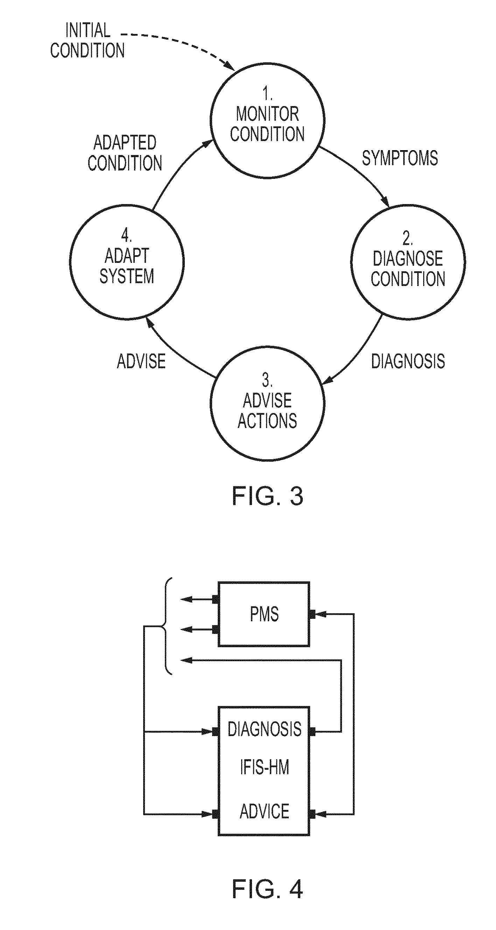

Figure 2 and 3 illustrate schematically a method of managing the health of a machine according to an embodiment of the invention.

The method of the invention implements an Autonomous Health Management functionality extending the concept of contingency management. In a Health Management role, the diagnosis reasoning function (acting on symptoms and actions - both with history) not only locates any fault in the machine but is also used as an input to a treatment advice system.

The treatment advice proposes suitable tasks to act upon based on a fault diagnosis, current system state and outcome of previous actions (action history). The capability to automatically generate advice and make subsequent recommendations based on the measured system effects and status of the advice history provides novelty to this process. A supervisory controller is used to validate the advice.

Health management is realised by allowing the system to operate iteratively in closed loop, progressively diagnosing and advising the system control. Executing actions and feeding back the effects of these actions is analogous to medical care, where different drugs and advice are trialled for effectiveness.

The iterative process (progressively assessing) can be considered to follow the flow chart of Figure 3. The reasoning in the process implements uncertainty management by the use of a hybrid rule based system which accepts a vector of continuously or discrete valued input and compares to a rule-base (one for diagnosis and one for advice generation).

Initially an exact match rule is searched and then a nearest rule is selected. The selected rule is then assigned to a decision output through a weighting factor. A rule-based approach is simple to understand and validate. The rule-base itself is stored as a data file separated from the inference code allowing updates without recertification.

This procedure allows for health investigation of the machine condition and effectiveness of various mitigating control strategies. Through the described, the system seeks to perform fault investigations which would in manned systems be performed by an experienced operator (for example, a pilot).

Potentially, actions include: executing diagnostic tests, sensor/acquisition reconfiguration for improved measurement fidelity, reporting to ground station for information or with expectation of external advice, control behaviour modification including imposed system constraints.

An example embodiment of the invention is shown in Figure 4 as a Simulink implementation of closed-loop health management architecture for an ASTRAE ROMEO 1 technology demonstrator.

Figure 4 illustrates a system for managing the health of a machine according to an embodiment of the invention.

In this embodiment, contingency management and health investigation are enabled for a Power Management System (PMS) architecture.

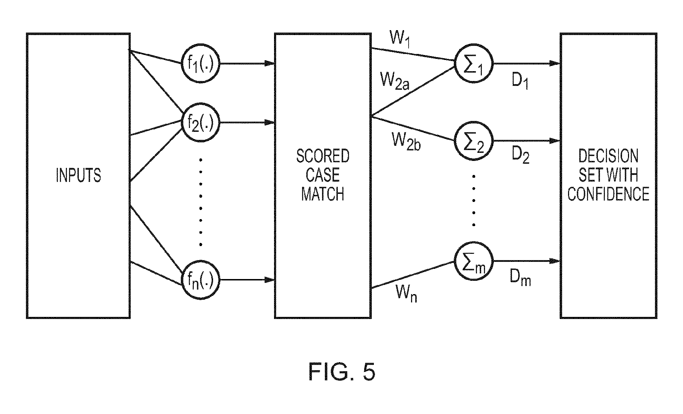

With this implementation, two sets of rule-based informed reasoning are performed for diagnosis and contingency management action selection. The reasoning is achieved using "Intelligent Fault Isolation System" (IFIS) software (patented as EP(UK)2047339), shown schematically in Figure 5. In this reuse, the underlying technology is used for not only the original diagnostic intention (i.e. fault isolation) but also as the autonomous reasoning engine for selecting actions. In general the reasoning allows exact and best fit input pattern matching against a set of pre-defined (anticipated) scenarios or rules.

The closest matches are weighted for decision confidence and become the output advice. The confidence measure is key to enabling reliable delegation of authority between the platform control hierarchies. The confidence information may be used by higher authority levels to determine the risk involved in implementing advised actions.

The diagnostic instance of IFIS (IFIS-D) accepts a set of inputs and produces a diagnostic health decision that is reported to the Power Management System (PMS). The PMS is responsible for responding to machine or operator demands for energy and power supply, based on knowledge of the present capabilities of the power system's power sources, sinks and distribution network as well as the operational context.

The diagnosis is conditionally accepted by the PMS (for example, it is validated against pre-determined high integrity plausibility tests) and becomes the input to the Advisory (IFIS-A).

The same reasoning engine (IFIS) is again used for the advisory rules are tested against diagnostic and system state inputs and the status, if any, of permissible system actions. The action decision outputs and the status ascribed by PMS, are then made available for the next diagnostic and advise iterations ('closing the loop').

The combination of diagnostic (IFIS-D) and advisory (IFIS_A) in this closed-loop architecture is termed IFIS-HM (IFS Health Management). The inputs and outputs to the IFIS-HM system are summarised in Table 1 below.

**Table 1. Inputs and Outputs to the IFIS-HM System**

| **Function** | **IFIS-HM Instance** | **Input** | **Output** |
|---|---|---|---|
| **Diagnosis** | IFIS-D | Diagnostic Features, Parameter Exceedances, Advice Status and History. | Component / subsystem diagnosis. Fault item and confidence |
| **Action Advisory** | IFIS-A | Parameter Exceedances, Trend Analysis, Diagnosis, Advice Status and History. | Action Advisory: diagnostic test, control action, sensor/subsystem reconfiguration, report to ground station, control behaviour modification, imposed system constraints, recording of proposed on-ground / back at base maintenance actions, etc. |

An example scenario for the embodiment of Figures 4 and 5 is set out below.

An unanticipated combination of vibration features exceed pre-defined thresholds, causing the diagnosis produced by IFIS-D to contain ambiguity. An advice rule, designed to reduce ambiguity in this situation, is matched to this even and proposes the execution of test signal to excite the system and produce benefit through more informative observed data.

However, it is known a priori that there is some operability cost (risk) for this test, and both expected cost and benefit, in terms of enhanced system health understanding, are fed with the advice to a supervisory function. In the event the machine is performing some uninterruptible behaviour (for example, climb to a set altitude) the cost of performing the action may be too high and thus be temporarily rejected (setting status to 'pending').

Knowing this action history is invaluable to contingency management, and the advice rule-base can be populated to account for rejected action by specifying a rule to target the described scenario. For example, an alternative advisory action of power reduction may be proposed until the diagnostic test is permitted to execute by the supervisory control.

The continual monitoring of the system state and environmental context permits the first (pending) advice of diagnostic test to be executed once the transitory operational event is completed. The results of any such diagnostic test would then be assessed by the rule-base to evaluate if specific targeted control reconfigurations, reporting to ground station or further diagnostic tests are appropriate. Further control action could include: control behaviour modification, imposed system constraints, recording of proposed on-ground / back at base maintenance actions, etc.

The following example shows how the method and system of the present invention can be implemented in an aerospace application. As already mentioned earlier, the method and system of the invention may alternatively be applied to other technology areas such as, for example, automobiles, other transport technology or industrial machinery.

In this example, the method and system of the invention are applied in the field of autonomous aircraft. The machine is an aircraft and the performance optimisation system of the invention comprises an Integrated System Health Manager (ISHM) and a Power Manager.

The ISHM is a system comprising a processor and a plurality of sensing elements positioned around the aircraft to sense operational parameters, such as engine speed, airspeed, engine vibration, etc. The Power Manager provides an interface between the ISHM and the engine controllers which in turn control the performance of the aircraft's powerplants.

In this example, the aircraft is a twin engined patrol aircraft on a routine coastal mission with all systems operating normally and within pre-determined limits.

At this point, the port engine suffers a 'bird strike' (i.e. a bird is ingested by the aircraft's port engine). The ISHM responds autonomously to the 'bird strike' event. As a consequence of this event, there are several changes to the operating conditions of the aircraft.

The port engine suddenly exhibits a high level of vibration caused by the engine having ingested the bird. This causes internal damage to the internal components of the aircraft's gas turbine engine which in turn results in the rotating parts of the engine becoming rotationally unbalanced.

This 'out-of-balance' performance is detected by the ISHM which flags that the damaged engine has a capability problem. At this point the ISHM is not able to determine the cause of the fault that is causing the increased vibration.

The ISHM generates an optimising action in the form of a diagnostic test which it requests to be performed on the damaged engine. The particular diagnostic test is a vibration survey. This is a diagnostic test in which the engine controller ramps the engine speed from an idle condition up to full spool speed and then back down again, during which time the ISHM is collecting vibration data from the vibration sensor on the engine.

The ISHM send the request for the vibration survey to the aircraft's Power Manager to see if it can be incorporated into the aircraft's current mission plan.

At the point when the 'bird strike' occurs, the Power Manager is controlling the aircraft in a climb manoeuvre. Consequently, the Power Manager defers the vibration survey until the present manoeuvre is complete.

Since the ISHM cannot get the vibration survey results, the ISHM generates a further optimising action in the form of a temporary thrust limit for the damaged engine, which is sent to the Power Manager.

The Power Manager implements the temporary thrust limit and reduces the speed of the damaged engine. This reduction in engine speed has a consequential effect of reducing the vibration caused by the damaged engine.

Subsequently, with the aircraft's climb manoeuvre completed, the Power Manager initiates the vibration survey. This requires the damaged engine to reduce speed to its idle condition and then to slowly increase at a steady rate through its speed range to its maximum speed. During this event, the ISHM is reconfigured to collect vibration data specifically for the purposes of analysing the vibration survey.

After analysing the vibration survey results, the ISHM issues further optimising action in the form of a Keep Out advisory which is sent to the Power Manager. This requests that the engine's operating speed be kept either below a Lower Keep Out limit or above an Upper Keep Out limit. In other words, the engine speed is to avoid the Keep Out limit range.

The aircraft is thus able to continue its mission albeit with slightly reduced capability due to the imposition of the Keep Out limit on the damaged engine.

In contrast, an aircraft having a conventional engine monitoring system would likely have aborted its mission immediately on experiencing the 'bird strike' and returned to its base with the affected engine shutdown.

The use of the method and system of the invention can significantly improve the utilisation of a machine following some sort of untoward event or occurrence.

The foregoing description of various aspects of the invention has been presented for purposes of illustration and description. It is not intended to be exhaustive or to limit the invention to the precise form disclosed, and obviously, many modifications and variations are possible. Such modifications and variations that may be apparent to a person of skill in the art are included within the scope of the invention as defined by the accompanying claims.

## Claims

1. A method of optimising the performance of a machine, the machine comprising an element, the method comprising the steps of:
(a) receiving operational data, the operational data being representative of an operational state of the machine;
(b) transmitting an adjustment signal to the element to change the operational state of the element from a first state to a second state, the predetermined second state being dependent on the operational state of the machine;
(c) generating an optimising action by processing the operational data, a history of previous operational states of the machine, a history of previous adjustment signals, and a sequence of previously applied optimising actions ; and
(d) applying the optimising action to the machine to optimise the performance of the machine.

2. The method as claimed in Claim 1, wherein step (c) comprises applying rules to the operational data, the history of previous operational states of the machine, any adjustment signals, and the sequence of previously applied optimising actions.

3. The method as claimed in Claim 1 or Claim 2, wherein the optimising action is a diagnostic test, and step (d) comprises the steps of:
• applying the diagnostic test to the element to obtain a corresponding diagnostic test result;
• if the diagnostic test result indicates that a performance of the element is deficient relative to a predetermined capability of the element, generating a corrective action based on the operational data and the diagnostic test result; and
• applying the corrective action to the element to thereby restore the performance of the element, and so to optimise the performance of the machine.

4. The method as claimed in Claim 3, wherein the corrective action is generated by the steps of:
• processing the operational data and the diagnostic test result to generate a plurality of remedial actions;
• ranking the remedial actions according to a prediction of each remedial action's ability to restore the performance of the element to the level defined by its capability; and
• setting the corrective action to be the highest ranked of the remedial actions.

5. The method as claimed in Claim 4, wherein the step of generating a plurality of remedial actions comprises applying rules to the operational data and the diagnostic test result.

6. The method as claimed in any one of Claims 1 to 5, wherein the machine further comprises a sensing element configured to sense an operational parameter of the machine, the sensing element being coupled to the element, and the optimising action comprises the reconfiguration of the sensing element, and step (d) comprises the steps of:
• comparing a performance of the element with a predetermined capability of the element; and
• if the performance differs from the capability by an amount greater than a predetermined reconfiguration margin then perform a reconfiguration of the sensing element associated with the element, to optimise the performance of the machine.

7. The method as claimed in any one of Claims 1 to 5, wherein the optimising action comprises an interaction between the machine and an external control station, and step (d) comprises the steps of:
• transmitting operational data from the element to an external control station;
• analysing the operational data to determine a current performance of the element;
• generating, within the external control station, a transformation signal based on the current performance of the element and a predetermined capability of the element;
• transmitting the transformation signal from the external control station to the machine; and
• applying the transformation signal to the element to restore the performance of the element to a level defined by its capability, and so optimise the performance of the machine.

8. A system for optimising the performance of a machine, the machine comprising an element, the system comprising:
a data capture module, adapted to capture operational data, the operational data being representative of an operational state of the machine;
a processor adapted to receive operational data from the data capture module, and to generate corresponding control signals and adjustment signals;
a control signal transmission module adapted to transmit the control signals to the element;
an adjustment signal transmission module adapted to transmit the adjustment signals to the element;
the processor being further adapted to generate an optimising action by processing the operational data, a history of previous operational states of the machine, a history of previous adjustment signals, and a sequence of previously applied optimising actions;
the processor being still further adapted to alter the state of the element dependent on the optimising action, and so to optimise the performance of the machine.

9. The system as claimed in Claim 8, wherein the element comprises an actuatable element.

10. The system as claimed in Claim 8 or Claim 9, the system further comprising a sensing element configured to sense an operational parameter of the machine, the sensing element being coupled to the element.

11. The system as claimed in any one of Claims 8 to 10, wherein the optimising action is a diagnostic test to be applied to the element.

12. The system as claimed in any one of Claims 8 to 11, further comprising an operational data transmission module and an external control station, the operational data transmission module being adapted to transmit operational data to the external control station, the external control station being adapted to process the operational data and transmit an adjustment signal to the system, and the system being adapted to alter the state of the element dependent upon the adjustment signal, to optimise the performance of the machine.

13. The system as claimed in any one of Claims 8 to 12, wherein the machine is a hybrid powerplant comprising a plurality of prime movers, each prime mover being selected from the group comprising gas turbine engines, steam turbine engines, reciprocating piston engines and electric motors.

14. A computer program having instructions adapted to carry out the method as claimed in any one of Claims 1 to 7.

15. A computer readable medium, having a computer program recorded thereon, wherein the computer program is adapted to make the computer execute the method as claimed in any one of Claims 1 to 7.
